# FASCICULE DE BREVET EUROPEEN

(11) **EP 2 857 260 B1**
(45) Date de publication et mention de la délivrance du brevet: **24.08.2016**
(21) Numéro de dépôt: 14185460.4
(22) Date de dépôt: 18.09.2014
(51) Int. Cl.: B60N 2/66, B60N 2/24, B60N 2/30, B60N 2/42, B60N 2/427

(54) **Siège pour véhicule militaire**
Sitz für Militärfahrzeug
Seat for military vehicle

(30) Priorité: 19.09.2013 FR 1302184
(43) Date de publication de la demande: 08.04.2015
(73) Titulaire: NEXTER Systems, 42328 Roanne (FR)
(72) Inventeur: Lebaillif, David, 18023 Bourges (FR); Carrié, Sébastien, 18023 Bourges (FR); Petitpas, Eric, 18023 Bourges (FR); Bois, David, 18023 Bourges (FR)
(74) Mandataire: Cabinet Chaillot

(56) Documents cités:
- EP-A2- 2 028 040
- FR-A1- 2 932 428
- US-A1- 2008 185 884

## Description

Le domaine technique de l'invention est celui des sièges de véhicules blindés.

Les véhicules blindés sont susceptibles de subir des agressions de type explosion de mines sous plancher qui, même si elles n'endommagent pas la structure du véhicule, risquent de blesser les passagers du véhicule soumis à la transmission d'un choc par les sièges qu'ils occupent.

Pour limiter la transmission de ce choc violent aux passagers il est connu du brevet FR 2 932 428 A1 (correspondant au préambule de la revendication indépendante) de recourir à un siège dont l'assise peut se dérober sous le passager sous l'effet du choc. Pour cela, l'assise est capable de pivoter vers le bas après libération de butées dimensionnées pour retenir l'assise dans son utilisation en siège et pour céder lors d'un choc d'un niveau prédéterminé.

En règle générale, le passager d'un tel siège a sa colonne vertébrale située en position sensiblement verticale et parallèle au sens d'action de la force d'impulsion du choc reçu lors d'une explosion de mine sous le plancher.

Malgré la présence d'un dispositif tel que précédemment cité, cette position du passager au moment du choc initial et les chocs consécutifs peuvent occasionner de graves lésions de la colonne vertébrale par tassement de celle-ci.

L'invention propose de résoudre ce problème de positionnement de la colonne vertébrale du passager au moment d'un choc violent reçu sous le plancher du véhicule, tel un choc de mine.

Ainsi, l'invention a pour objet un siège pour véhicule militaire comportant d'une part un dossier et d'autre part une assise pour un passager, assise apte à pivoter autour d'une liaison pivot pour passer d'une position repliée où elle est sensiblement parallèle au dossier à une position dépliée où elle est sensiblement perpendiculaire au dossier, la liberté de pivotement de la liaison pivot étant limitée vers le bas par au moins un moyen de retenue apte à libérer l'abaissement de l'assise au-delà de la position dépliée suite à un effort d'un niveau prédéterminé consécutif à un choc de mine, siège caractérisé en ce que la partie arrière de l'assise est solidaire d'une plaque de soutien lombaire sensiblement perpendiculaire à l'assise et apte à pivoter avec l'assise.

Avantageusement, la liaison pivot est située en arrière de la face avant de la plaque de soutien lombaire en contact avec le dos du passager.

Avantageusement, la plaque de soutien lombaire se situe sensiblement dans le prolongement du dossier en position d'usage normal du siège.

Avantageusement, la plaque de soutien lombaire comporte un matériau souple.

L'invention sera mieux comprise à la lecture de la description ci-après, description faite en référence aux dessins suivants dans lesquels :
La figure 1 représente, une vue schématique latérale d'un siège et de son passager en position assise.
La figure 2 représente une vue schématique latérale d'un siège et de son passager en position consécutive à un choc de mine.

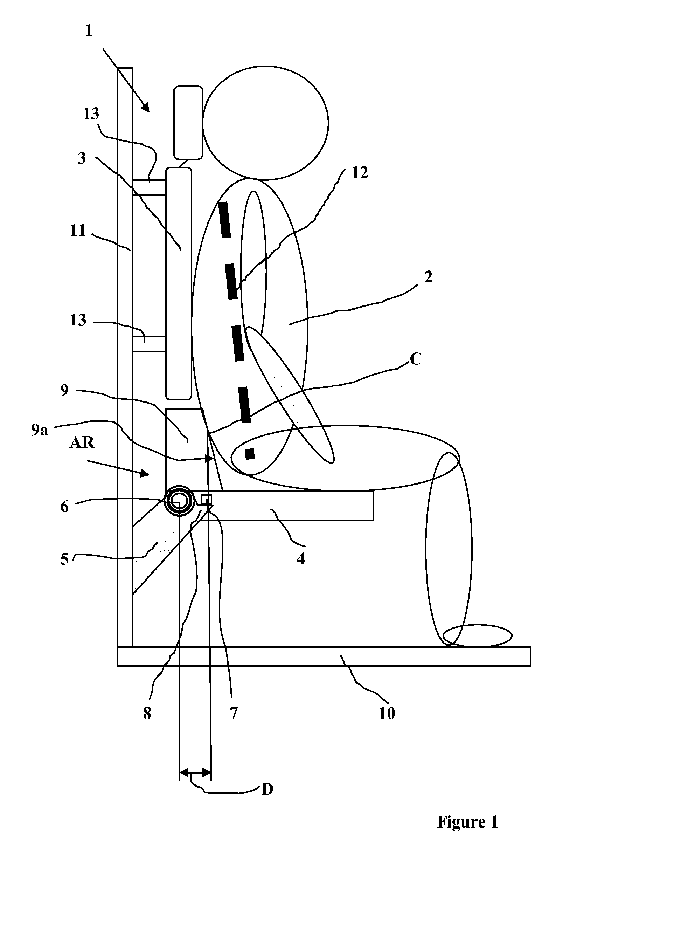

Selon la figure 1, un véhicule blindé comporte un habitacle destiné à recevoir un équipage (véhicule et habitacle non représentés). L'habitacle comporte un plancher 10 et une paroi externe verticale 11 solidaire d'un siège 1 destiné à permettre l'assise d'un passager 2.

Le siège comporte un dossier 3 qui est rendu solidaire de la paroi 11, par exemple par des pattes de fixation 13 soudées ou vissées à la paroi, ainsi qu'une assise 4 qui est rendue solidaire de la paroi 11 au moyen d'un support 5, soudé ou vissé à la paroi. L'assise 4 comporte au niveau de sa partie arrière une liaison pivot 6 articulée sur le support 5 destinée à permettre le pivotement de l'assise 4 par rapport au support 5 autour d'un axe 6 sensiblement horizontal.

En usage normal, pour permettre l'assise du passager 2, un moyen de retenue 7 empêche l'abaissement de l'assise 4 en dessous de l'horizontale. Le moyen de retenue 7 qui est visible sur les figures comporte une butée 7 qui interfère avec un ergot 8 du support 5 afin d'empêcher l'abaissement de l'assise 4.

Selon le mode de réalisation représenté, la disposition de la butée 7 et de l'ergot 8 ne s'oppose pas au relèvement de l'assise 4 afin de limiter l'encombrement du siège 1 lorsqu'il est inoccupé. Il est bien entendu que la paroi verticale 11 sera située à une distance de l'assise 4 suffisante pour autoriser ce repli sans interférences avec la paroi d'une plaque de soutien 9 solidaire de l'assise 4.

Selon le mode de réalisation représenté, la butée 7 est dimensionnée pour se rompre sous l'effet d'un choc de mine. Il est à la portée de l'Homme du Métier de définir des moyens de retenue 7 équivalents au mode de réalisation représenté. On pourra se reporter au brevet FR2932428 qui décrit différentes solutions envisageables.

Ainsi on pourra envisager de rompre l'ergot 8 au lieu de la butée 7 ou bien d'utiliser une structure 5 déformable permettant également de libérer l'assise 4 en abaissement.

La partie arrière AR de l'assise 4 comporte une plaque de soutien lombaire 9 s'étendant sensiblement perpendiculairement à l'assise 4. Elle se situe dans le prolongement du dossier 3 lorsque l'assise est en position dépliée.

Cette plaque de soutien lombaire 9 est destinée à prendre appui contre la base du dos du passager 2. Le passager 2 assis sur le siège 1 dans la configuration assise représentée à la figure 1, est dans une position assise naturelle avec sa colonne vertébrale 12 sensiblement verticale.

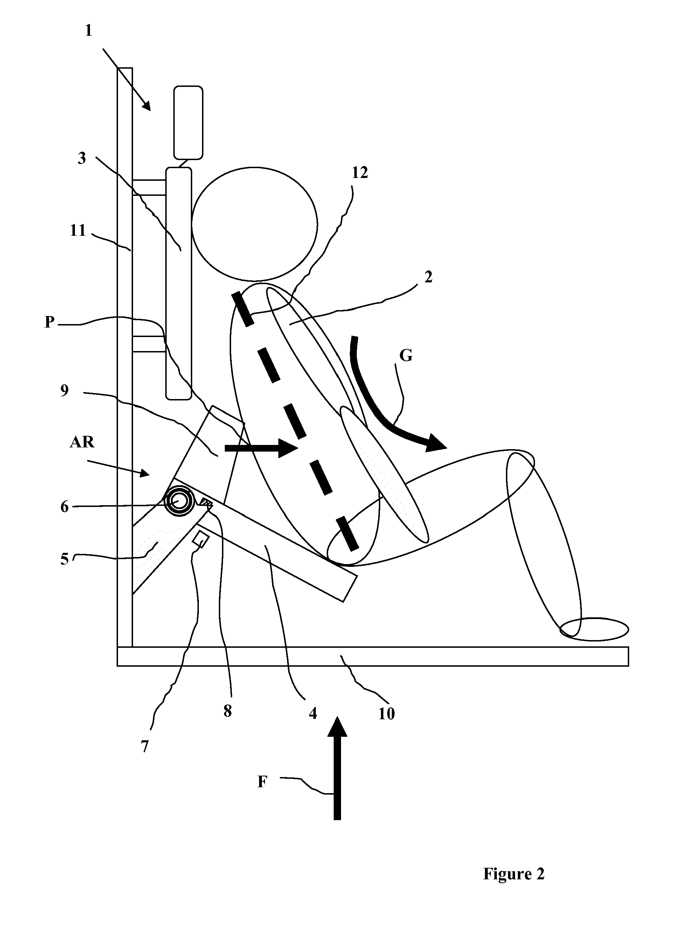

Selon la figure 2, le véhicule a subi un choc de mine sous le plancher 10 générant un effort violent F vertical.

Ce choc a provoqué la rupture de la butée 7. L'assise 4 n'étant plus limitée en abaissement, elle effectue un pivotement R autour de la liaison pivot 6 vers le bas.

Ce faisant, la plaque de soutien lombaire 9 qui pivote avec l'assise 4 exerce un effort de poussée P au niveau de la base de la colonne vertébrale du passager. Le dos du passager 2 est ainsi soumis à une rotation et glisse (flèche G) sur l'assise 4. La colonne vertébrale 12 du passager n'est alors plus verticale ce qui limite le risque de blessures par tassement.

Selon un mode de réalisation, la plaque de soutien 9 comportera un matériau souple dans sa partie C en contact avec la base du dos du passager pour ne pas blesser celui-ci lors de l'abaissement de l'assise 4 et pour assurer un confort satisfaisant en utilisation normale du siège. La liaison pivot 6 sera préférentiellement placée en arrière à une distance D du point d'application C de la force P entre la face avant 9a de la plaque de soutien 9 et la base du dos du passager, ceci afin d'optimiser le pivotement de l'assise et par voie de conséquence la déviation de la colonne vertébrale 12.

## Revendications

1. Siège (1) pour véhicule militaire comportant d'une part un dossier (3) et d'autre part une assise (4) pour un passager (2), assise (4) apte à pivoter autour d'une liaison pivot (6) pour passer d'une position repliée où elle est sensiblement parallèle au dossier (3) et une position dépliée où elle est sensiblement perpendiculaire au dossier (3), la liberté de pivotement de la liaison pivot (6) étant limitée vers le bas par au moins un moyen de retenue (7) apte à libérer l'abaissement de l'assise (4) au-delà de la position dépliée suite à un effort d'un niveau prédéterminé consécutif à un choc de mine, siège (1) **caractérisé en ce que** la partie arrière de l'assise (4) est solidaire d'une plaque de soutien lombaire (9) sensiblement perpendiculaire à l'assise (4) et apte à pivoter avec l'assise (4).

2. Siège (1) pour véhicule militaire selon la revendication 1, **caractérisé en ce que** la liaison pivot (6) est située à une distance D en arrière de la face avant de la plaque de soutien lombaire (9) en contact avec le dos du passager (2).

3. Siège (1) pour véhicule militaire selon une des revendications 1 à 2, **caractérisé en ce que** la plaque de soutien lombaire (9) se situe sensiblement dans le prolongement du dossier (3) en position d'usage normal du siège.

4. Siège (1) pour véhicule militaire selon une des revendications 1 à 3, **caractérisé en ce que** la plaque de soutien lombaire (9) comporte un matériau souple (9).

## Patentansprüche

1. Sitz (1) für Militärfahrzeug mit einerseits einer Lehne (3) und andererseits einer Sitzfläche (4) für einen Fahrgast (2), wobei die Sitzfläche (4) um eine Drehzapfen-Verbindung (6) rotieren kann, um von einer eingeklappter Position, in der sie im wesentlichen parallel zur Lehne (3) ist, in eine aufgeklappte Position überzugehen, in der sie im wesentlichen senkrecht zur Lehne ist (3), wobei die Drehfreiheit der Drehzapfen-Verbindung (6) nach unten durch mindestens ein Rückhaltmittel (7) begrenzt ist, das fähig ist, die Senkung der Sitzfläche (4) über die aufgeklappte Position hinaus nach einer Belastung in einer vorgegebenen Höhe nach einer Explosion einer Mine freizugeben, wobei der Sitz (1) **dadurch gekennzeichnet ist, dass** der hintere Teil der Sitzfläche (4) mit einer Lordosenstützplatte (9), die im wesentlichen senkrecht zur Sitzfläche (4) ist, verbunden ist und geeignet ist, mit der Sitzfläche (4) zu rotieren.

2. Sitz (1) für Militärfahrzeug nach Anspruch 1, **gekennzeichnet dadurch dass** die Drehzapfen-Verbindung (6) in einem Abstand D hinter der Vorderseite der Lordosenstützplatte (9) in Kontakt mit dem Rücken des Fahrgasts (2) gelegen ist.

3. Sitz (1) für Militärfahrzeug nach einem der Patentansprüche 1 bis 2, **gekennzeichnet dadurch, dass** die Lordosenstützplatte (9) im wesentlichen in der Verlängerung der Lehne (3) in normaler Gebrauchsstellung des Sitzes liegt.

4. Sitz (1) für Militärfahrzeug nach einem der Patentansprüche 1 bis 3, **gekennzeichnet dadurch, dass** die Lordosenstützplatte (9) ein biegsames Material (9) umfasst.

## Claims

1. Seat (1) for military vehicle comprising, on one hand, a backrest (3) and, on the other hand, a base (4) for a passenger (2), the base (4) being pivotable around a pin joint (6) to switch from a folded position in which it is substantially parallel to the backrest (3) and an unfolded position in which it is substantially perpendicular to the backrest (3), the pivoting range of the pin joint (6) being limited downwards by at least one retaining means (7) able to release the lowering of the base (4) beyond the unfolded position following a predetermined-level stress resulting from a mine shock, the seat (1) being **characterized in that** the rear part of the base (4) is integral with a lumbar support part (9) substantially perpendicular to the base (4) and pivotable with the base (4).

2. Seat (1) for military vehicle according to claim 1, **characterized in that** the pin joint (6) is located at a distance D rearward of the front face of the lumbar support plate (9) in contact with the back of the passenger (2).

3. Seat (1) for military vehicle according to one of claims 1 to 2, **characterized in that** the lumbar support plate (9) is located substantially in the extension of the backrest (3) in the normal use position of the seat.

4. Seat (1) for military vehicle according to one of claims 1 to 3, **characterized in that** the lumbar support plate (9) has a flexible material (9).
